# FASCICULE DE BREVET EUROPEEN

(11) **EP 1 344 964 B1**
(45) Date de publication et mention de la délivrance du brevet: **04.05.2011**
(21) Numéro de dépôt: 03290643.0
(22) Date de dépôt: 14.03.2003
(51) Int. Cl.: F16H 59/44, F16H 59/74, F16H 61/02

(54) **Procédé et dispositifs de contrôle des passages montants dans une transmission automatique ou automatisée**
Verfahren und Vorrichtung zur Hochschaltungssteuerung in einem Automatik- oder automatisierten Getriebe
Procedure and device for upshift in an automatic or automatized transmission

(30) Priorité: 15.03.2002 FR 0203239
(43) Date de publication de la demande: 17.09.2003
(73) Titulaire: Renault s.a.s., 92100 Boulogne Billancourt (FR)
(72) Inventeur: Poisson, Carine, 93160 Noisy-le-Grand (FR)
(74) Mandataire: Rougemont, Bernard

(56) Documents cités:
- WO-A-99/01685
- US-A- 5 166 879

## Description

La présente invention concerne les transmissions automatiques ou automatisées à rapports étagés, et plus précisément la gestion des passages de vitesses.

Cette invention a pour objet un procédé de commande des changements de rapports montants d'une transmission automatique ou automatisée, selon des lois de passage établies en fonction de la vitesse de déplacement du véhicule et de la charge du moteur.

Elle a également pour objet les calculateurs ainsi que les transmissions et les véhicules dans lesquels un tel procédé est mis en oeuvre.

Dans les transmissions automatiques conventionnelles, les changements de rapport sont déclenchés en fonction de la vitesse du véhicule et de la charge du moteur. Ces critères de vitesse et de charge sont pris en compte dans des lois de changement de rapport, matérialisées par des courbes dans un plan de coordonnées Vitesse véhicule / Variable de charge du moteur (papillon, position pédale d'accélérateur, puissance ...), et les changements de vitesse sont déclenchés lorsque le point de fonctionnement de la transmission traverse l'une de ces courbes.

Selon l'état de la technique connue, les courbes de passages montants et de passages descendants sont décalées, de façon à éviter le « phénomène de pompage », c'est à dire l'instabilité du rapport à proximité des courbes de passage.

D'autres mesures ont également été proposées pour empêcher des changements de rapports intempestifs, notamment dans la publication WO-A- 99/01685, qui divulgue toutes les caractéristiques du préambule de la revendication 1, relative à l'adaptation des lois de passage au style de conduite du conducteur.

Cependant, aucune des dispositions connues dans ce domaine ne parvient à empêcher que le passage effectif sur le rapport supérieur intervienne le plus souvent au-delà de la vitesse souhaitée, en raison du temps séparant le déclenchement du passage et le passage effectif sur le nouveau rapport.

La présente invention vise à améliorer la prestation de changement de rapport montant et à optimiser l'application des lois de passages montants dans une transmission automatique ou automatisée.

Dans ce but, elle propose que les passages montants soient déclenchés lorsque le régime moteur atteint une valeur déterminée à partir des lois de passage et de la variation de régime prévue pendant la phase de débrayage de la transmission.

De préférence, la variation du régime prévue, est fonction du rapport de la transmission et de la dérivée du régime moteur.

Cette variation du régime moteur prévue est par exemple déduite, d'une cartographie établie par mise au point.

D'autres caractéristiques et avantages de l'invention apparaîtront clairement à la lecture suivante de la description d'un mode de réalisation non limitatif de celle-ci, en se reportant aux dessins annexés, sur lesquels :
- la figure 1 rappelle le principe connu des lois de passages de vitesses, et
- la figure 2 illustre le procédé de commande de l'invention.

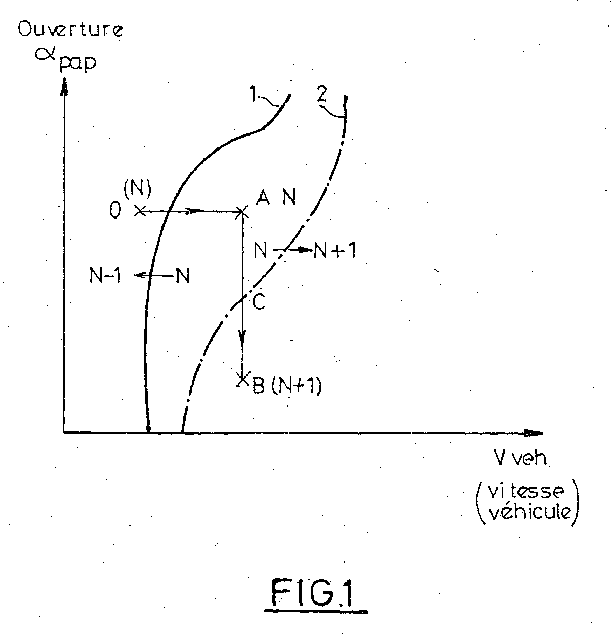

Sur la figure 1, relative à l'état de la technique connue, la courbe (1) est une courbe de passages descendants (N/N-1), et la courbe (2) est une courbe de passages montants (N/N+1). Ces courbes visent à effectuer les passages à des vitesses véhicule d'autant plus élevées que la charge du moteur est élevée, dans les limites du régime moteur maximum autorisé, appelé parfois « rupteur ». Par ailleurs, le décalage entre les deux courbes permet d'éviter les phénomènes dits de « pompage » évoqués plus haut.

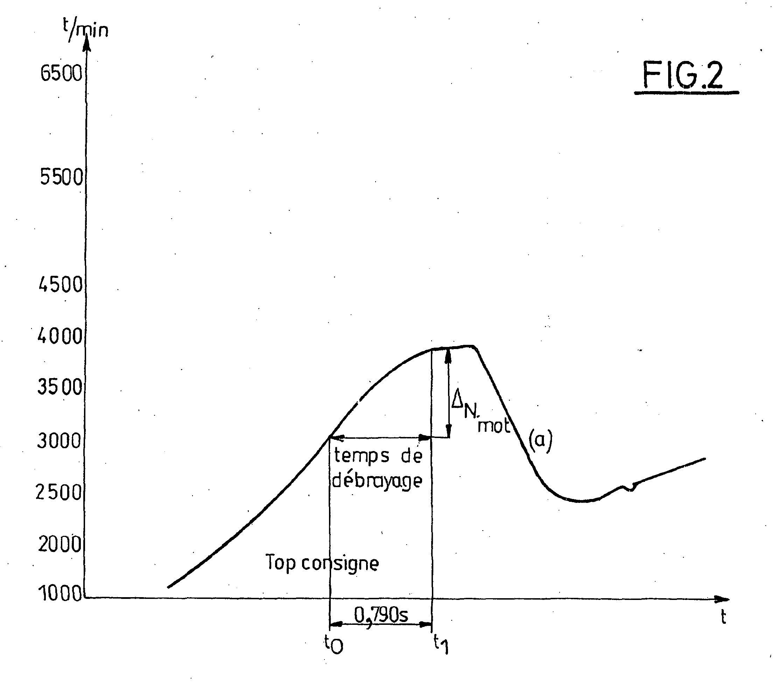

La figure 2 montre l'évolution du régime moteur Nₘₒₜ en tr/minute au cours d'un passage montant, par exemple un passage 1 / 2. Sur ce schéma, le top de consigne de passage montant 1 / 2, correspondant au croisement de la courbe 2 de la figure 1 intervient à l'instant tₒ = 0. La valeur du régime moteur à tₒ est de 3000 tr/mn environ. Le passage débute réellement, à l'instant t₁ = tₒ + 0,790 s, correspondant à la fin d'un temps de débrayage, où le régime moteur est d'environ 4000 tr/mn.

La courbe du régime moteur Nₘₒₜ met en évidence la mauvaise gestion du point de passage en l'absence de disposition particulière. En effet, si le passage est déclenché lorsque la vitesse réelle du véhicule est celle qui est souhaitée par la loi de passage, le passage s'effectue (en raison du temps de débrayage), au-delà de cette vitesse souhaitée, qui est de 3000 tr/mn dans cet exemple. La différence de 1000 tr/mn entre le régime souhaité et le régime réel lors du passage qui est mise en évidence sur le schéma, correspond à un écart de vitesse de déplacement véhicule d'environ 8 km/h, par rapport à la vitesse souhaitée par la loi de passage, En l'absence de disposition particulière, la loi de passage programmée n'est donc pas respectée du fait de l'augmentation du régime moteur Δ_{Nmot}, pendant le débrayage, entre le top de consigne à tₒ, et le passage effectif à t₁.

L'invention propose de prendre en compte la variation de régime moteur prévisible pendant la phase de débrayage du passage montant, de manière à lancer le top de consigne de passage, non pas à l'instant où le régime moteur Nₘₒₜ atteint le régime maximum autorisé en fonction de la charge du moteur et du régime établi, mais à l'instant où il atteint ce régime diminué de la variation de régime prévue pendant la phase de débrayage. En d'autres termes, les passages montants sont déclenchés lorsque le régime moteur Nₘₒₜ atteint une valeur déterminée à partir des lois de passage et de la variation de régime Δ_{Nmot} prévue pendant la phase de débrayage de la transmission.

Grâce à l'anticipation de l'augmentation de régime pendant la phase de débrayage, le passage s'effectue réellement au régime prévu par la loi de passage.

La variation du régime Δ_{Nmot} prévue, est fonction du rapport de la transmission et de la dérivée du régime moteur. La valeur du régime moteur Nₘₒₜ, donnée normalement par l'unité de contrôle, est donc dérivée, et cette dérivée fait avantageusement l'objet d'un filtrage numérique du premier ordre classique.

Selon un mode de réalisation particulier de l'invention, la variation du régime moteur prévue Δ_{Nmot} peut être déduite d'une cartographie établie par mise au point. Dans ce cas, la variation de régime prévue peut être évaluée à chaque instant par interpolation de la cartographie, avant d'être soustraite du régime maximum Nₘₐₓ autorisé par les lois de passage en fonction du rapport courant et de la charge du moteur α.

Conformément à l'invention, le régime moteur Nₘₒₜ est donc comparé à chaque instant à un seuil Nₘₐₓ- Δ_{Nmot}, ce seuil étant égal au régime du moteur Nₘₐₓ à la vitesse maximum autorisée en fonction de la charge moteur α sur le rapport courant, diminué de l'augmentation de régime Δ_{Nmot} prévue. Le top de début de passage est donc donné dès que Nₘₒₜ> Nₘₐₓ - Δ_{Nmot}.

Enfin, le régime moteur étant lié de façon linéaire à la vitesse en fonction du rapport de transmission établi, on passe directement d'une valeur de régime maximum autorisée Nₘₐₓ - Δ_{Nmot}, à une valeur de vitesse véhicule maximum autorisée, déclenchant le top de consigne de changement de rapport en fonction de la charge du moteur α, et tenant compte par anticipation, de la variation de régime pendant le passage.

## Revendications

1. Procédé de commande des changements de rapports montants d'une transmission automatique ou automatisée selon des lois de passage établies en fonction de la vitesse de déplacement du véhicule et de la charge du moteur (α), **caractérisé en ce que** les passages montants sont déclenchés lorsque le régime moteur (Nₘₒₜ) atteint une valeur (Nₘₐₓ) déterminée à partir des lois de passage et de la variation de régime moteur (Δ_{Nmot}) prévue pendant la phase de débrayage de la transmission.

2. Procédé de commande selon la revendication 1, **caractérisé en ce que** la variation du régime (Δ_{Nmot}) prévue, est fonction du rapport de la transmission et de la dérivée du régime moteur (Nₘₒₜ).

3. Procédé de commande selon la revendication 1, ou 2, **caractérisé en ce que**, la variation du régime moteur prévue (Δ_{Nmot}) est déduite d'une cartographie établie par mise au point.

4. Procédé de commande selon la revendication 1, 2 ou 3, **caractérisé en ce que** le régime moteur Nₘₒₜ est comparé à un seuil (Nₘₐₓ - Δ_{Nmot}), égal au régime du moteur (Nₘₐₓ) à la vitesse maximum autorisée sur le rapport courant, en fonction de la charge moteur (α), et en tenant compte de l'augmentation de régime Δ_{Nmot} prévue pendant le passage.

5. Calculateur de transmission, **caractérisé en ce qu'**il déclenche les passages montants conformément au procédé de l'une des revendications précédentes.

6. Transmission automatique à passages sous couple, **caractérisée en ce qu'**elle comporte un calculateur conforme à la revendication 5.

7. Transmission automatisée à rupture de couple, **caractérisée en ce qu'**elle comporte un calculateur conforme à la revendication 5.

8. Véhicule automobile, **caractérisé en ce qu'**il comporte une transmission conforme à la revendication 6 ou 7.

## Claims

1. Upshift control method in an automatic or automated transmission according to established shifting laws as a function of the speed of displacement of the vehicle and the engine load (α), **characterized in that** upshifting is triggered when the engine regime (Nₘₒₜ) attains a value (Nₘₐₓ) determined from the shifting laws and the anticipated variation in the engine regime (Δ_{Nmot}) during the declutching phase of the transmission.

2. Control method according to Claim 1, **characterized in that** the anticipated variation in the regime (Δ_{Nmot}) is a function of the gear ratio of the transmission and the derivative of the engine regime (Nₘₒₜ).

3. Control method according to Claim 1 or 2, **characterized in that** the anticipated variation in the engine regime (Δ_{Nmot}) is deduced from mapping determined by calibration.

4. Control method according to Claim 1, 2 or 3, **characterized in that** the engine regime Nₘₒₜ is compared to a threshold (Nₘₐₓ - Δ_{Nmot}), equal to the engine regime (Nₘₐₓ) at the maximum authorized speed on the current gear ratio, as a function of the engine load (α) and taking into account the anticipated increase in the regime Δ_{Nmot} during shifting.

5. Transmission computer, **characterized in that** upshifting is triggered according to the method of one of the preceding claims.

6. Automatic transmission with shifting under torque, **characterized in that** it comprises a computer according to Claim 5.

7. Automatic transmission with torque interrupt, **characterized in that** it comprises a computer according to Claim 5.

8. Automotive vehicle **characterized in that** it comprises a transmission according to Claim 6 or 7.

## Patentansprüche

1. Verfahren zur Steuerung der Hochschaltvorgänge eines Automatik- oder automatisierten Getriebes gemäß Schaltgesetzen, die in Abhängigkeit von der Bewegungsgeschwindigkeit des Fahrzeugs und der Motorlast (α) erstellt werden, **dadurch gekennzeichnet, dass** die Hochschaltvorgänge ausgelöst werden, wenn die Motordrehzahl (Nₘₒₜ) einen Wert (Nₘₐₓ) erreicht, der ausgehend von den Schaltgesetzen und von der Motordrehzahländerung (Δ_{Nmot}) bestimmt wird, die während der Auskupplungsphase des Getriebes vorgesehen ist.

2. Steuerverfahren nach Anspruch 1, **dadurch gekennzeichnet, dass** die vorgesehene Änderung der Drehzahl (Δ_{Nmot}) vom Übersetzungsverhältnis des Getriebes und von der Ableitung der Motordrehzahl (Nₘₒₜ) abhängt.

3. Steuerverfahren nach Anspruch 1 oder 2, **dadurch gekennzeichnet, dass** die vorgesehene Änderung der Motordrehzahl (Δ_{Nmot}) von einem Kennfeld abgeleitet wird, das durch Einstellung erstellt wird.

4. Steuerverfahren nach Anspruch 1, 2 oder 3, **dadurch gekennzeichnet, dass** die Motordrehzahl Nₘₒₜ mit einem Schwellwert (Nₘₐₓ - Δ_{Nmot}) gleich der Drehzahl des Motors (Nₘₐₓ) bei der bei dem laufenden Übersetzungsverhältnis erlaubten maximalen Geschwindigkeit abhängig von der Motorlast (α) und unter Berücksichtigung der während des Schaltvorgangs vorgesehenen Drehzahlerhöhung Δ_{Nmot} verglichen wird.

5. Getrieberechner, **dadurch gekennzeichnet, dass** er die Hochschaltvorgänge gemäß dem Verfahren eines der vorhergehenden Ansprüche auslöst.

6. Automatikgetriebe mit Schaltvorgängen unter Drehmoment, **dadurch gekennzeichnet, dass** es einen Rechner gemäß Anspruch 5 aufweist.

7. Automatikgetriebe mit Drehmomentunterbrechung, **dadurch gekennzeichnet, dass** es einen Rechner gemäß Anspruch 5 aufweist.

8. Kraftfahrzeug, **dadurch gekennzeichnet, dass** es ein Getriebe gemäß Anspruch 6 oder 7 aufweist.
